# EUROPÄISCHE PATENTSCHRIFT

(11) **EP 3 726 064 B1**
(45) Veröffentlichungstag und Bekanntmachung des Hinweises auf die Patenterteilung: **04.09.2024**
(21) Anmeldenummer: 20168139.2
(22) Anmeldetag: 06.04.2020
(51) Int. Cl.: F04D 29/66, F04D 29/58, F04D 29/60

(54) **HALTEVORRICHTUNG UND WÄRMESCHUTZSCHILD FÜR EINE HALTEVORRICHTUNG**
HOLDING DEVICE AND HEAT SHIELD FOR A HOLDING DEVICE
DISPOSITIF DE MAINTIEN ET ÉCRAN DE PROTECTION THERMIQUE POUR UN DISPOSITIF DE MAINTIEN

(30) Priorität: 18.04.2019 DE 102019205705
(43) Veröffentlichungstag der Anmeldung: 21.10.2020
(73) Patentinhaber: Robert Bosch GmbH, 70442 Stuttgart (DE)
(72) Erfinder: Yilmaz, Fatih, 22846 Nordersteet (DE); Kotthaus, Stefan, 76547 Sinzheim (DE); Renard, Nicolas, 76137 Karlsruhe (DE); Kammerer, Kai, 77654 Offenburg (DE)

(56) Entgegenhaltungen:
- WO-A1-2017/001155
- FR-A1- 2 870 169
- US-A- 6 129 328
- US-A1- 2003 127 923

## Beschreibung

Die Erfindung geht aus von einer Haltevorrichtung und einem Wärmeschutzschild für eine Haltevorrichtung nach Gattung der unabhängigen Ansprüche.

### Stand der Technik

Es ist schon bekannt zum Schutz von Komponenten Wärmeschutzelemente vorzusehen. Solche Wärmeschutzelemente sind in der Regel als kastenförmige Elemente ausgebildet, welche die zu schützende Komponente umschließen und aufgrund ihrer axialen und radialen Anschlagsfläche gegenüber der im Innenraum angeordneten Komponente bezüglich dieser eindeutig positioniert sind. Darüber hinaus ist es auch bekannt Wärmeschutzelemente an starren Bauteilen im Bauraum anzubringen. Solche Wärmeschutzelemente gehen üblicherweise mit einem hohen Bauraumbedarf einher. WO2017/001155 A1 offenbart eine Haltevorrichtung zur Befestigung einer Pumpe in einem Kraftfahrzeug, mit einem Halteelement, wobei das Halteelement einen Befestigungsabschnitt zum Anbringen des Halteelementes im Kraftfahrzeug aufweist und wobei das Halteelement zur Aufnahme der Pumpe ausgebildet ist und wobei das Halteelement zumindest einen Elastomerabschnitt aufweist.

### Offenbarung der Erfindung

### Vorteile

Die Erfindung geht aus von einer Haltevorrichtung zur Befestigung eines Aggregats, insbesondere einer Pumpe, in einem Kraftfahrzeug mit einem Halteelement, wobei das Halteelement einen Befestigungsabschnitt zum Anbringen des Halteelementes im Kraftfahrzeug aufweist und wobei das Halteelement zur Aufnahme des Aggregates ausgebildet ist und wobei das Halteelement zumindest einen Elastomerabschnitt aufweist. Die Haltevorrichtung weist einen am Elastomerabschnitt befestigten Wärmeschutzschild auf, welcher dazu ausgebildet ist, das Aggregat gegenüber einer Wärmeeinwirkung durch Komponenten des Kraftfahrzeuges zumindest teilweise abzuschirmen.

Die erfindungsgemäße Haltevorrichtung mit den Merkmalen der unabhängigen Ansprüche hat den Vorteil, dass durch die unmittelbare Befestigung des Wärmeschutzschildes am Elastomerabschnitt des Halteelementes in vorteilhafter Weise die Übertragung von Schüttel- und Vibrationsbelastungen des Kraftfahrzeuges auf den Wärmeschutzschild reduziert werden können, sodass der Wärmschutzschild besonders platzsparend mit geringem Abstand zum Aggregat selbst befestigt werden kann. Insbesondere im Bereich der Hybridtechnologie mit seinen hohen Bauraumanforderungen kann es vorkommen, dass das Aggregat sehr nah an heißen Komponenten, wie beispielsweise Komponenten des Verbrennungsantriebs angeordnet ist. Durch die Befestigung des Wärmeschutzschildes am Elastomerabschnitt kann hier in besonders platzsparender Weise das Aggregat vor abstrahlender Wärme dieser Wärmequellen geschützt werden. Ein Vorteil der Haltevorrichtung ist, dass ein solches Wärmeschutzschild besonders einfach und kostengünstig in einer Vielzahl von Komponentenanordnungen im Kraftfahrzeug einsetzbar ist. Insbesondere ist es möglich bestehende Systeme mit einem solchen Wärmeschutzschild nachzurüsten, wobei in vorteilhafter Weise das Wärmeschutzschild kundenseitig montiert werden kann.

Im Rahmen der vorliegenden Erfindung kann unter einem Wärmeschutzschild insbesondere ein solches Element verstanden werden, welches die Übertragung von Wärmeenergie beziehungsweise einen Wärmefluss in Richtung des Aggregates reduziert. Insbesondere kann der Wärmeschutzschild die Wärmeübertragung durch Konvektion und/oder Wärmestrahlung reduzieren.

Vorzugsweise kann hierbei die Wärmeübertragung von den das Aggregat umgebenden Komponenten auf das Aggregat so weit reduziert werden, dass das Aggregat innerhalb von typischen Zeitskalen nicht über eine kritische Temperatur erwärmt wird.

Bei der Konstruktion und Auslegung von Systemkomponenten, wie z.B. einer Kühlkreislaufpumpe für ein Kraftfahrzeug, sind die im Betrieb des Kraftfahrzeugs zu erwartenden dynamischen Belastungen insbesondere der Bauteile der Systemkomponenten, wie Leiterplatten und Pin-Verbindungen, eine Herausforderung für die Entwickler in Bezug auf Dauerhaltbarkeit. Oftmals führen die hohen Lastenheftanforderungen, die engen Bauräume und der Kostendruck zu einer Unterdimensionierung kritischer Bauteile, welche zum Versagen einer Einzelkomponente und somit auch des Aggregats führen können. Beispielhaft seien hier Anforderungen an die Schüttelbelastbarkeit des Aggregats bei einem Anbau an einen Verbrennungsmotor des Kraftfahrzeuges genannt. Die daraus resultierenden dynamischen Beanspruchungen der Erzeugnisse liegen oft weit oberhalb der zulässigen Beanspruchbarkeit. Fehlende oder ungenügende Werkstoffdämpfungen verursachen oftmals bei Schüttelbelastungen kritische Resonanzfrequenzen mit bis zu 20-facher Überhöhung der Anregung und beeinträchtigen somit die gewünschte Lebensdauer des Erzeugnisses stark. Hierbei hängt die Übertragungsintensität der Schwingungsenergie vom Schwingungserreger an das Aggregat stark von der Verbindungsart der Bauteile und deren Materialdämpfungen ab. Eine starre Halterung des Aggregats am Motor bedeutet eine ungedämpfte Übertragung der Anregungsenergie an das Aggregat und somit eine zu starke Belastung des Aggregates. Die Lebensdauer des Aggregates ist umgekehrt proportional zu dessen Belastungen, wobei die Beanspruchungen mittels einer Dämpfung entscheidend minimiert werden können. Zu diesem Zweck eigenen sich insbesondere Halterelemente mit einem Elastomerabschnitt, welcher aus einem Material mit hochdämpfenden Eigenschaften ausgebildet ist, wie beispielsweise ein Elastomerabschnitt aus EPDM (Ethylen-Propylen-Dien-Kautschuk), welcher die Schwingungsenergie absorbiert und diese in innere Reibung umwandeln kann.

Durch die in den Unteransprüchen aufgeführten Maßnahmen ergeben sich vorteilhafte Weiterbildungen und Verbesserungen der unabhängigen Merkmale. Die erfindungsgemäße Haltevorrichtung beziehungsweise eine vorteilhafte Weiterbildung zeichnet sich dadurch aus, dass der Elastomerabschnitt einen Innenbereich zur Aufnahme des Aggregates aufweist. Auf diese Weise kann eine Schwingungsanregung des Aggregates in besonders vorteilhafter Weise minimiert werden. Vorzugsweise ist der Innenbereich ferner im Wesentlichen zu einer Axialrichtung rotationssymmetrisch und umschließt gemäß einer vorteilhaften Weiterbildung der Erfindung das Aggregat in Umfangsrichtung vollständig. Auf diese Weise kann eine besonders einfache und verliersichere Einspannung des Aggregates bereitgestellt werden. Besonders vorzugsweise ist der Elastomerabschnitt im Wesentlichen ringförmig als ein das Halteelement ausbildender Elastomerhalter ausgebildet. Ein solcher Elastomerhalter lässt sich besonders einfach fertigen und weist optimale Dämpfungseigenschaften auf. In diesem Zusammenhang kann unter einem Elastomerhalter insbesondere ein solches Halteelement verstanden werden, welches vollständig aus einem elastischen Material, insbesondere einem Elastomer ausgebildet ist.

Gemäß der beanspruchten Erfindung ist es vorgesehen, dass der Wärmeschutzschild einen Abschirmabschnitt aufweist, welcher sich im Wesentlichen in Radialrichtung erstreckt. Gemäß der beanspruchten Erfindung überdeckt hierbei der Abschirmabschnitt eine Gehäuseseite des Aggregates im Wesentlichen zumindest teilweise. Auf diese Weise wird das Aggregat insbesondere vor Wärmestrahlung geschützt.

Eine besonders einfache Befestigung des Wärmeschutzschildes am Elastomerabschnitt kann insbesondere dadurch bereitgestellt werden, dass am Abschirmabschnitt zumindest ein Kopplungsabschnitt angeordnet ist. Insbesondere die Verwendung von zwei Kopplungsabschnitten ermöglicht eine besonders einfach montierbare und gleichzeitig stabile Anbindung des Wärmeschutzschildes am Elastomerabschnitt. Vorzugsweise weist zu diesem Zweck der Elastomerabschnitt einen zu dem wenigstens einen Kopplungsabschnitt komplementären Aufnahmeabschnitt auf.

Besonders einfach montieren lässt sich der Wärmeschutzschild indem der Aufnahmeabschnitt als eine sich im Wesentlichen in Axialrichtung erstreckende Aufnahmeöffnung ausgebildet ist. In eine solche Aufnahmeöffnung lässt sich das entsprechende Kopplungselement besondere ein- beziehungsweise durchschieben. Eine besonders stabile Verbindung zwischen dem Wärmeschutzschild und dem Elastomerabschnitt wird insbesondere durch schlitzförmige Aufnahmeöffnungen bereitgestellt. Unter einer schlitzförmigen Öffnung kann in diesem Zusammenhang insbesondere eine solche Öffnung verstanden werden, welche im Querschnitt eine wesentlich größere Breite als Höhe aufweist. Insbesondere eine Ausgestaltung als Durchgangsöffnung, durch welche das entsprechende Kopplungselement vollständig durchgeschoben wird ermöglicht eine besonders stabile und einfach zu montierende Anbindung.

Besonders kostengünstig zu fertigen ist ein solcher Wärmeschutzschild, wenn der Abschirmabschnitt mit dem zumindest einen Kopplungsabschnitt einstückig ausgebildet ist. Besonders optimierte Wärmedämmung bei gleichzeitig niedrigen Materialkosten kann insbesondere dadurch erreicht werden, dass das Wärmeschutzschild Metall uns alternativ hierzu oder zusätzlich einen Verbundwerkstoff aufweist. Insbesondere eine Ausgestaltung aus Metall lässt sich besonders einfach und kostengünstig als Stanzbiegeteil fertigen.

Um ein Herausfallen des Wärmeschutzschildes gegen die Montagerichtung zu verhindern ist es gemäß einer vorteilhaften Weiterbildung der Erfindung vorgesehen, dass der Kopplungsabschnitt und alternativ hierzu oder zusätzlich auch der Aufnahmeabschnitt eine Rasteinrichtung aufweist. Eine solche Rasteinrichtung kann insbesondere durch Rasthaken, Rastnasen oder Rastvorsprünge gebildet werden. Eine solche Rasteinrichtung weist vorzugsweise eine, zwei, drei oder vier Rastflächen auf, mittels welcher die Rasteinrichtung am Aufnahmeabschnitt und entsprechend zusätzlich oder alternativ hierzu auch am Kopplungsabschnitt verrastend ansitzt. Eine besonders bevorzugte Ausführungsform der Erfindung sieht vor, dass die Rasteinrichtung als sich in Radialrichtung erstreckende Rasthaken ausgebildet sind, welche im Bereich der jeweils freien Enden der Kopplungsabschnitte angeformt sind. Bei der Montage des Wärmeschutzschildes werden die Rasthaken durch die Aufnahmeöffnungen durchgeschoben, sodass die Rasthaken mit ihren jeweiligen Rastflächen verrastend an der Stirnfläche des Elastomerabschnittes ansitzen. Auf diese Weise kann ein Herausfallen des Wärmeschutzschildes entgegen der Montagerichtung vorteilhaft verhindert werden.

Um die Einschiebetiefe des Wärmeschutzschildes in den Aufnahmeabschnitt des Elastomerabschnittes in vorteilhafter Weise zu begrenzen, ist es gemäß einer vorteilhaften Weiterbildung der Erfindung vorgesehen, dass der Kopplungsabschnitt einen Axialanschlag aufweist. Vorzugsweise ist der Axialanschlag als entsprechender Axialhaken, Axialnase oder Axialvorsprung ausgebildet. Vorzugsweise sind Anschlagshaken und Rasthaken formkongruent und in Axialrichtung beabstandet zueinander ausgebildet.

Gemäß der beanspruchten Erfindung ist der Abschirmabschnitt im Wesentlichen scheibenförmig ausgebildet ist, wobei der Abschirmabschnitt eine Durchgangsöffnung zur Aufnahme des Fluideinlasses des Aggregates aufweist. Bei der Montage des Wärmeschutzschildes wird dabei der Fluidauslass durch die Durchgangsöffnung durchgeschoben, sodass das Wärmeschutzschild in vorteilhafter Weise besonderes nah am Aggregat angeordnet ist. Durch die Befestigung des Wärmeschutzschildes am Elastomerabschnitt wird gleichzeitig eine Schwingungsanregung des Wärmeschutzschildes in vorteilhafter Weise minimiert, sodass das Wärmeschutzschild trotz dieser platzsparenden Anordnung nicht gegen nächstliegende Bauteile schlägt.

Um auch den Fluidauslass vor einer Wärmeeinwirkung zu schützen weist das Abschirmelement gemäß einer vorteilhaften Weiterbildung der Erfindung einen flächigen Fortsatz auf, welcher zumindest teilweise einen sich im Wesentlichen in Radialebene erstreckenden Fluidauslass des Aggregates überdeckt. Vorzugsweise ist der Fortsatz zumindest abschnittsweise schalenförmig, insbesondere halbrohrförmig ausgebildet ist. Auf diese Weise kann der Fluidauslass von einer Wärmeeinstrahlung aus verschiedenen Winkeln abgeschirmt werden. Um auch das Aggregat von einer Wärmeeinstrahlung aus verschiedenen Winkeln abzuschirmen, ist es gemäß einer vorteilhaften Weiterbildung der Erfindung vorgesehen, dass der Abschirmabschnitt einen umlaufenden Kragen aufweist, welcher sich im Wesentlichen in Richtung des Aggregates erstreckt.

Zur Befestigung des Halteelementes am Kraftfahrzeug weist das Halteelement einen Befestigungsabschnitt auf. Der Befestigungsabschnitt kann dabei gemäß einer Ausführungsform der Erfindung eine Aufnahmebohrung für eine entsprechende Schraubverbindung ausgebildet ist. Es ist jedoch auch denkbar, dass der der Befestigungsabschnitt als Einlegeteil für den Elastomerabschnitt ausgebildet ist. Vorzugsweise weist hierbei das Einlegeteil an seinen gegenüberliegenden Seiten jeweils einen Flügel auf, welcher in den Elastomerabschnitt hineinragt. Durch einen solchen Flügel kann mittels einer gezielt ortsbezogenen Vergrößerung beziehungsweise Verlängerung des Einlegeteils die Steifigkeit des gesamten Halteelementes verbessert werden. Die Verlängerung des Einlegeteils durch solche Flügel verbessert außerdem die Verankerung des Einlegeteils im Elastomer, so dass keine großen Relativbewegungen mehr möglich sind und somit keine Risse im Elastomermaterial auftreten. Zur Befestigung am Kraftfahrzeug weist das Einlegeteil vorzugsweise ein oder mehrere Abschlusselemente auf. Diese können vorzugsweise als Anschlussbolzen zur Aufnahme einer entsprechenden Schraubverbindung angeordnet sind.

### Zeichnungen

In den Zeichnungen sind Ausführungsbeispiele der Haltevorrichtung beziehungsweise des Wärmeschutzschildes abgebildet und in der nachfolgenden Beschreibung näher erläutert. Es zeigen
Figur 1 eine perspektivische Darstellung einer Haltevorrichtung gemäß einer ersten Ausführungsform mit einem Aggregat,
Figur 2 eine perspektivische Explosionsdarstellung einer Haltevorrichtung gemäß Figur 1,
Figur 3 eine perspektivische Darstellung einer weiteren Ausführungsform des Halteelementes mit einem Aggregat.

### Beschreibung

In den verschiedenen Ausführungsvarianten erhalten gleiche Teile die gleichen Bezugszahlen.

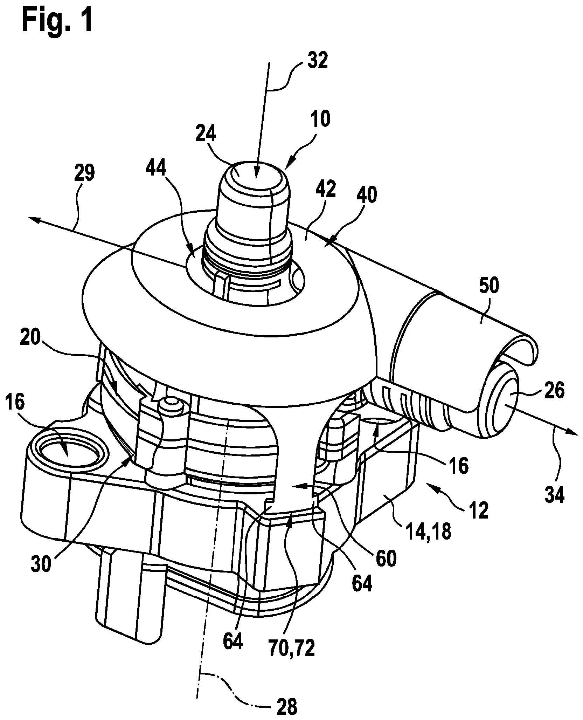

Figur 1 zeigt ein Aggregat 10, welches über eine Haltevorrichtung 12 in einem Bauraum, und zwar in einem Kraftfahrzeug angebracht werden kann. Das Aggregat 10 kann insbesondere eine Pumpe, eine Kühlkreislaufpumpe, ein Elektromotor, ein Lüfter oder weitere Komponenten, die an und/oder in einem Kraftfahrzeug angebracht werden, sein. Beispielhaft ist in Figur 1 das Aggregat 10 als Pumpe, bzw. als Kühlkreislaufpumpe ausgebildet. Das Kraftfahrzeug ist in Figur 1 zur Vereinfachung der Darstellung nicht dargestellt.

Die Haltevorrichtung 12 weist ein Halteelement 14 mit einem Befestigungsabschnitt 16 auf. Der Befestigungsabschnitt 16 ist dazu vorgesehen das Halteelement 14 an dem Kraftfahrzeug zu befestigen. Wie in Figur 1 deutlich zu erkennen ist, ist das Halteelement 14 zur Aufnahme des Aggregates 10 ausgebildet. Figur 1 zeigt beispielhaft eine mittels eines elektrischen Antriebs, insbesondere eines elektrisch kommutierten Elektromotors angetriebene Pumpe 10. Eine Pumpe der hier zur Rede stehenden Art weist in der Regel ein Flügelrad auf, welches mit einer Drehzahl von in etwa 3750 Umdrehungen/min rotiert. Somit weist die Pumpe eine Resonanzfrequenz auf, welche in etwa bei 500 Hz liegt. Die Übertragung der Resonanzfrequenz und damit die unerwünschte Übertragung des Schalls von der Pumpe bis hin zum Kraftfahrzeuginnenraum erfolgt vom Aggregat 10 über das Halteelement 14 an den Befestigungsabschnitt 16 und schließlich an das Kraftfahrzeug. Erfindungsgemäß ist es nunmehr vorgesehen, dass das Halteelement 16 einen Elastomerabschnitt 18 aufweist. Der Elastomerabschnitt 18 ist in vorteilhafter Weise dazu in der Lage die unerwünschte Übertragung des Schalls vom Aggregat bis hin zum Kraftfahrzeuginnenraum zu minimieren. Neben der Geräuschminimierung ist es ferner Aufgabe der Haltevorrichtung 12 als Dämpfungs- und Entkopplungselement dynamische Belastungen, wie beispielsweise Schüttel- und Vibrationsbelastungen, welche im Betrieb des Kraftfahrzeugs auftreten können, abzufangen. Darüber hinaus ermöglicht eine solche Haltevorrichtung 12 in vorteilhafter Weise eine verliersichere Einspannung des Aggregates 10.

Wie in Figur 1 zu erkennen ist, weist die Pumpe 10 ein Pumpengehäuse 20 auf.

Das Pumpengehäuse 20 weist einen Fluideinlass 24 und einen Fluidauslass 26 auf. Über den Fluideinlass 24 wird das Fluid angesaugt und anschließend über den Auslass 26 weitergeleitet. Dabei strömt ein Hauptvolumenstrom des Fluids durch den Fluideinlass 24 in einer Einströmrichtung 32 in die Fluidkammer des Pumpengehäuses 20 ein und anschließend über den Fluidauslass 26 in einer Ausströmrichtung 34 aus der Fluidkammer aus. Wie in Figur 1 zu erkennen ist, entspricht gemäß der hier dargestellten Ausführungsform der Erfindung die Einströmrichtung 32 im Wesentlichen einer Axialrichtung 28 des Aggregates. Die Ausströmrichtung 34 ist im Wesentlichen achsparallel zu einer entsprechenden Radialrichtung 29 angeordnet.

Gemäß der in Figur 1 dargestellten Ausführungsform der Erfindung ist der Elastomerabschnitt 18 im Wesentlichen ringförmig als ein das Halteelement 14 ausbildender Elastomerhalter ausgebildet und umschließt das Aggregat 10. Wie bereits erwähnt, ist gemäß einer Ausführungsform der Erfindung das Aggregat 10 als Pumpe ausgebildet. Eine solche Pumpe, wie sie beispielsweise in Figur 1 dargestellt ist, weist in der Regel in ihrem Aufnahmebereich für die Haltevorrichtung 12 einen im Wesentlichen zur Axialrichtung 28 rotationssymmetrisch ausgebildeten Querschnitt auf. Zur verliersicheren Befestigung des Aggregates 10 im Elastomerabschnitt 18 des Halteelementes 14 weist der Elastomerabschnitt 18 einen Innenbereich 30 auf, mit welchem der im Wesentlichen ringförmige Elastomerabschnitt 18 am Aggregat anliegt. Die Kontur des Innenbereiches 30 des Elastomerabschnittes 18 ist somit an die Kontur des Aufnahmebereiches des Aggregates 10 angepasst. Gemäß der in Figur 1 dargestellten Ausführungsform der Erfindung ist somit der Innenbereich 30 im Wesentlichen zur Axialrichtung 28 rotationssymmetrisch ausgebildet.

Gemäß einer vorteilhaften Ausführungsform der Erfindung, wie sie beispielhaft in Figur 1 dargestellt ist, wird eine optimale, verliersichere Befestigung des Aggregates 10 im Halteelement 14 dadurch bereitgestellt, dass der Durchmesser des Innenbereiches 30 kleiner dimensioniert ist als der Durchmesser des Aggregates 10 im entsprechenden Aufnahmebereich. Bei der Montage des Halteelementes 14 beziehungsweise des Elastomerabschnittes 18 wird dieser somit unter Vorspannung auf das Aggregat 10 aufgeschoben. Auf diese Weise kann eine für die verliersichere Einspannung benötigte Radialpressung zwischen dem Elastomerabschnitt 18 und dem Aggregat 10 bereitgestellt werden.

Im Betrieb eines Kraftfahrzeuges wird Wärmeenergie erzeugt, welche Komponenten im Kraftfahrzeug negativ beeinflussen kann. Insbesondere im Bereich der Hybridtechnologien mit ihren hohen Bauraumanforderungen kann es vorkommen, dass Komponenten des Thermomanagements sehr nah an heißen Komponenten, wie beispielsweise Komponenten des Abgassystems angeordnet sind. Zur Abschirmung der Wärme dieser Wärmequellen vom Aggregat ist es erfindungsgemäß vorgesehen, dass am Elastomerabschnitt 18 des Halteelementes 14 ein Wärmeschutzschild 40 befestigt ist. Ein solcher Wärmeschutzschild 40 ist vorzugsweise derart ausgebildet, dass er die Übertragung von Wärmeenergie beziehungsweise einen Wärmefluss in Richtung des Aggregates 10 reduziert. Insbesondere kann der Wärmeschutzschild 40 die Wärmeübertragung durch Konvektion und/oder Wärmestrahlung reduzieren. Vorzugsweise kann hierbei die Wärmeübertragung von den das Aggregat 10 umgebenden Komponenten auf das Aggregat 10 so weit reduziert werden, dass das Aggregat 10 innerhalb von typischen Zeitskalen nicht über eine kritische Temperatur erwärmt wird. Zu diesem Zweck ist der Wärmschutzschild 40 vorzugweise aus Metall und alternativ hierzu oder zusätzlich aus einem Verbundwerkstoff ausgebildet. Durch die Befestigung des Wärmeschutzschildes 40 am Elastomerabschnitt 18 des Halteelementes 14 können in vorteilhafter Weise die Übertragung von Schüttel- und Vibrationsbelastungen des Kraftfahrzeuges auf der Wärmeschutzschild 40 reduziert werden, sodass der Wärmschutzschild 40 besonders platzsparend mit geringem Abstand zum Aggregat 10 selbst befestigt kann.

Gemäß der beanspruchten Erfindung weist der Wärmeschutzschild 40 einen Abschirmabschnitt 42 auf, welcher sich im Wesentlichen in Radialrichtung 29 erstreckt. Der Abschirmabschnitt 42 ist als im Wesentlichen plattenförmiges Element ausgebildet und überdeckt eine Gehäuseseite des Aggregates 10, sodass das Aggregat 10 vor der Übertragung der Wärmeenergie entsprechend ausreichend abgeschirmt ist. Gemäß der in Figur 1 dargestellten Ausführungsform der Erfindung ist der Wärmeschutzschild 40 an der dem Flügelrad zugeordneten Gehäuseseite des Aggregates 10 angeordnet. Gemäß der beanspruchten Erfindung ist der Abschirmabschnitt 42 im Wesentlichen scheibenförmig ausgebildet und erstreckt sich in einer Radialebene und somit vorzugsweise im Wesentlichen parallel zum Halteelement 14. Der Abschirmabschnitt 42 weist eine zentrale Durchgangsöffnung 44 auf. Bei der Montage des Wärmeschutzschildes 40 wird der Fluideinlassstutzen 24 durch diese Durchgangsöffnung 44 geschoben, sodass das Wärmeschutzschild 40 möglichst nah am Pumpengehäuse 20 angeordnet ist.

Wie in Figur 1 deutlich zu erkennen ist, weist das Wärmeschutzschild 40 gemäß der hier dargestellten Ausführungsform der Erfindung, ein zur Abschirmung des sich im Wesentlichen parallel zur Radialrichtung 29 beziehungsweise in Radialebene erstreckenden Fluidauslasses 26 einen flächigen Fortsatz 50 auf, welcher den Fluidauslass 26 an der dem Halteelement 14 abgewandten Seite zumindest teilweise überdeckt. Gemäß der in Figur 1 dargestellten Ausführungsform der Erfindung ist dabei der Fortsatz 50 schalenförmig ausgebildet. Der Fortsatz 50 ist hierbei an die Kontur des im Wesentlichen hohzylinderförmigen Fluidauslasstutzen 26 angepasst und weist eine halbrohrförmige Form auf. Auf diese Weise kann der Fluidauslassstutzen von einer Wärmeeinstrahlung aus verschiedenen Winkeln abgeschirmt werden. Wie in Figur 1 zu erkennen ist, weist der Fortsatz 50 vorzugsweise eine Länge auf, welche im Wesentlichen der Länge des Fluidauslasses 26 entspricht, sodass der Fluidauslasstutzen 26 in vorteilhafter Weise über die gesamte radiale Erstreckung abgeschirmt ist.

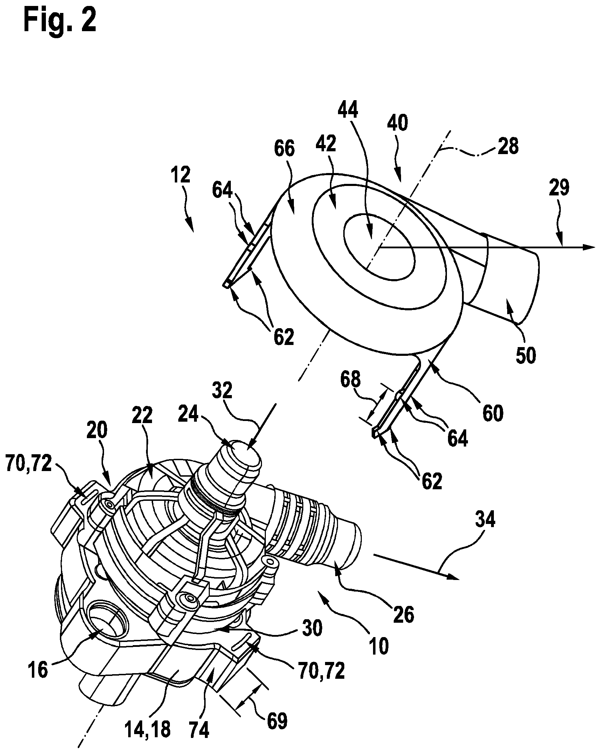

Zur Befestigung des Wärmeschutzschildes 40 am Elastomerabschnitt 14 weist der Wärmeschutzschild 40 Kopplungsabschnitte 60 auf. Wie in Figur 1 zu erkennen ist, erstrecken sich die Kopplungsabschnitte 60 im Wesentlichen in Axialrichtung 28. Zur Befestigung des Wärmeschutzschildes 40 am Elastomerabschnitt 18 weist der Elastomerabschnitt 18 einen entsprechenden zum Kopplungsabschnitt 60 komplementären Aufnahmeabschnitt 70 auf. Gemäß der in Figur 1 dargestellten Ausführungsform der Erfindung ist der Aufnahmeabschnitt 70 als eine sich in Axialrichtung erstreckende, schlitzförmige Aufnahmeöffnung 72 ausgebildet. Bei der Montage des Wärmeschutzschildes 40 wird dabei der Kopplungsabschnitt 60 durch die Aufnahmeöffnung 72 durchgeschoben, sodass der Kopplungsabschnitt 60 den Elastomerabschnitt 18 in Axialrichtung 28 vollständig durchgreift. Der in Figur 1 dargestellte Wärmeschutzschild 40 ist als einteiliges Blechteil, insbesondere als Stanzbiegeteil ausgebildet. Ausgestaltung und Befestigung des Wärmeschutzschildes 40 am Elastomerabschnitt 18 ist in Figur 2 näher erläutert.

Figur 2 zeigt die Haltevorrichtung gemäß Figur 1 in einer Teilexplosionsdarstellung vor dem Einschieben des Wärmeschutzschildes 40 in das Halteelement 14. Wie in Figur 2 deutlich zu erkennen ist, weist der Wärmeschutzschild 40 einen im Wesentlichen ebenen, sich in Radialrichtung 29 erstreckenden Abschirmabschnitt 42 auf. Der Abschirmabschnitt 42 weist eine zentrale, vorzugsweise zur Einströmrichtung 32 koaxiale Durchgangsöffnung 44 auf. Der Durchmesser der Durchgangsöffnung 44 ist ferner derart bemessen, dass der Fluideinlass 24 vollständig durch die Durchgangsöffnung 44 durchgeschoben werden kann. Wie in Figur 2 deutlich zu erkennen ist, ist am Abschirmabschnitt 42 der flächige Fortsatz 50 zur Abschirmung des Fluidauslasses 26 angeformt. Der flächige Fortsatz 50 erstreckt sich hierbei im Wesentlichen in der Ebene des Abschirmabschnittes 42 und ist im Wesentlichen schalenförmig ausgebildet, sodass es den Fluidauslass 26 zumindest teilweise auch in Axialrichtung 28 überdeckt.

Gemäß der in Figur 2 dargestellten Ausführungsform der Erfindung weist der Wärmeschutzschild 40 zwei Kopplungsabschnitte 60 auf, Die Kopplungsabschnitte 60 sind am äußeren Rand des Abschirmabschnittes 42 angeordnet und erstrecken sich im Wesentlichen in Axialrichtung 28. Gemäß der in Figur 2 dargestellten Erfindung sind die Kopplungsabschnitte 60 als laschenförmige Elemente ausgebildet.

Um Wärmestrahlungen nicht nur aus einer axialen Richtung abzuschirmen, sondern auch unter einem bestimmten Winkel zum Aggregat 10, weist der im Wesentlichen kreisscheibenförmige Abschirmabschnitt 42 an seinem radial äußeren Rand einen umlaufenden Kragen 66 auf. Der umlaufende Kragen 66 erstreckt sich dabei zumindest teilweise in Axialrichtung, sodass der Abschirmabschnitt 42 eine topf- beziehungsweise wannenförmige Kontur aufweist. Gemäß der in Figur 2 dargestellten Ausführungsform der Erfindung ist der Abschirmabschnitt 42 mit seinem umlaufenden Kragen 66 einstückig ausgebildet, wobei der Übergang zwischen dem sich im Wesentlichen in Radialrichtung 29 erstreckenden, scheibenförmigen Abschnitt und dem sich in Axialrichtung 28 erstreckenden Abschnitt des umlaufenden Kragens 66 kehlförmig gewölbt ausgebildet ist.

Wie in Figur 2 zu erkennen ist, weist das Wärmeschutzschild 40 gemäß Figur 2 zwei Kopplungsabschnitte 60 auf. Die Kopplungsabschnitte, beziehungsweise flachen Kopplungslaschen 60 sind entsprechend am umlaufenden Kragen 66 an jeweils gegenüberliegenden Seiten des Abschirmabschnittes 42 angeordnet. Es sei an dieser Stelle jedoch ausdrücklich erwähnt, dass Anzahl und Anordnung der Kopplungsabschnitte 60 an die entsprechend vorliegenden Randbedingungen angepasst werden können. Bei der Montage werden die Kopplungsabschnitte 60 in die korrespondierenden Aufnahmeöffnungen 72 des Elastomerabschnittes 18 eingeschoben. Wie in Figur 2 deutlich zu erkennen ist, erstrecken sich die Aufnahmeöffnungen entsprechend der Form der Kopplungsabschnitte 60 als im Wesentlichen rechteckige, schlitzförmige Durchgangsöffnungen in Axialrichtung 28. Zur Ausbildung dieser Aufnahmeschlitze 72 weist der Elastomerabschnitt 18 gemäß der in Figur 2 dargestellten Ausführungsform der Erfindung einen sich in Radialrichtung erstreckenden Vorsprung auf, sodass der Aufnahmeschlitz umfangsseitig von Elastomermaterial mit einer für die Stabilität ausreichenden Wandstärke umgeben wird.

Gemäß der in Figur 2 dargestellten Ausführungsform der Erfindung weisen die Kopplungsabschnitte 60 jeweils eine Rasteinrichtung 62 auf, wobei die Rasteinrichtung 62 als sich in Radialrichtung 29 erstreckende Rasthaken beziehungsweise Rastnasen ausgebildet sind, welche im Bereich der jeweils freien Enden der Kopplungsabschnitte 60 angeformt sind. Gemäß der in Figur 2 dargestellten Ausführungsform der Erfindung ist an jeder Seitenkante des Kopplungsabschnittes 60 jeweils ein Rasthaken 62 angeordnet. Vorzugsweise befinden sich die beiden Rasthaken 62 auf einer axialen Höhe des Kopplungsabschnittes 60. Bei der Montage des Wärmeschutzschildes 40 werden die Rasthaken 62 durch die Aufnahmeöffnungen 72 durchgeschoben, sodass die Rasthaken mit ihren jeweiligen Rastflächen verrastend an der Stirnfläche des Elastomerabschnittes 18 ansitzen. Auf diese Weise kann ein Herausfallen des Wärmeschutzschildes 40 entgegen der Montagerichtung vorteilhaft verhindert werden. Neben der in Figur 2 dargestellten Anordnung der Rasthaken 62 am Kopplungsabschnitt 60 ist es auch denkbar, dass die Rasteinrichtung 62 am Aufnahmeabschnitt 70 angeordnet ist. So ist es beispielsweise auch denkbar, dass im Aufnahmeschlitz entsprechende Rastvorsprünge angeformt sind, welche mit dem Kopplungsabschnitt 60 derart zusammenwirken, dass ein Lösen des eingeschobenen Wärmeschutzschildes 40 gegen die Montagerichtung verhindert werden kann.

Wie in Figur 2 zu erkennen ist, weisen die Kopplungselemente 60 neben den Rastnasen 62 jeweils einen Axialanschlag 64 auf. Der Axialanschlag 64 ist gemäß der in Figur 2 dargestellten Ausführungsform der Erfindung als Anschlagshaken beziehungsweise Anschlagsnase ausgebildet, welche ebenfalls in Radialrichtung über die Kontur des Kopplungselementes 60 hinaussteht. Gemäß der in Figur 2 dargestellten Ausführungsform der Erfindung ist an jeder Seitenkante des Kopplungsabschnittes 60 jeweils ein Anschlagshaken 64 angeordnet. Vorzugsweise befinden sich die beiden Anschlagshaken 64 auf einer axialen Höhe des Kopplungsabschnittes 60. Anschlagshaken 64 und Kopplungshaken 64 sind dabei vorzugsweise formkongruent, insbesondere deckungsgleich ausgebildet. Beim Einschieben des Kopplungsabschnittes 60 in die Aufnahmeöffnung 72 begrenzt das Anschlagselement 64 aufgrund seiner Wechselwirkung mit der dem Abschirmabschnitt 42 zugewandten Stirnfläche des Elastomerabschnittes 18 die Einschiebetiefe. Anschlagselement 64 und Rasteinrichtung 62 weisen dabei vorzugsweise einen Axialabstand 68 auf, welcher im Wesentlichen der axialen Höhe 69 des Elastomerabschnitte 18 im Bereich der Aufnahmeöffnung 72 entspricht. Auf diese Weise ist die Position der entsprechenden Kopplungsabschnitte 60 gegenüber dem Halteelement 14 eindeutig definiert. Gemäß der in Figur 2 dargestellten Ausführungsform der Erfindung ist der Elastomerabschnitt 18 als ein im Wesentlichen ringförmiger, das Halteelement ausbildender Elastomerhalter ausgebildet ist. Zur Befestigung des Halteelementes 14 am Kraftfahrzeug (hier nicht dargestellt) weist das Halteelement einen Befestigungsabschnitt 16 auf. Gemäß der in Figur 2 dargestellten Ausführungsform der Erfindung ist der Befestigungsabschnitt 16

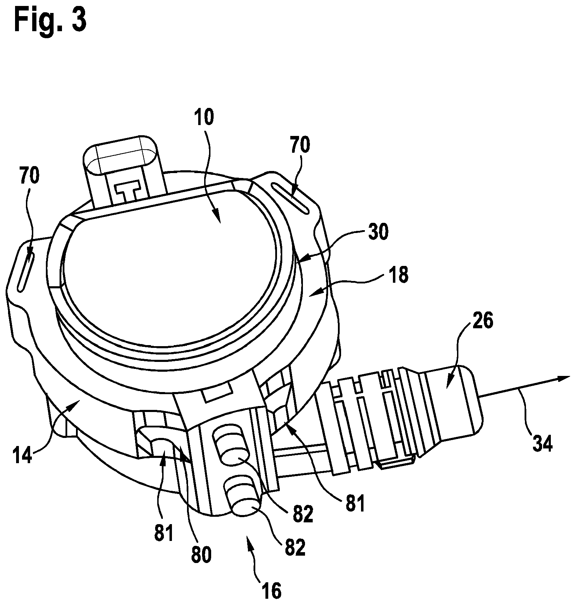

Aufnahmebohrung zur Aufnahme einer Schraubverbindung ausgebildet. Es sind jedoch auch andere Befestigungsformen und entsprechende Befestigungsabschnitte 16 denkbar. Figur 3 zeigt eine weitere Ausführungsform eines solchen Befestigungsabschnittes 16.

Figur 3 zeigt ein entsprechendes Aggregat 10 von seiner dem Flügelrad abgewandten Seite, sodass aufgrund der gewählten Perspektive der Fluideinlass 24 verdeckt ist. Das in Figur 3 dargestellte Halteelement weist ebenfalls einen Elastomerabschnitt 18 mit einem das Aggregat 10 vollumfänglich umschließenden ringförmigen Innenbereich 30 auf. Zur Befestigung des Halteelementes 14 am Kraftfahrzeug weist das Halteelement 14 einen Befestigungsabschnitt 16 auf, welcher als Einlegeteil 80 für den ringförmigen Elastomerabschnitt 18 ausgebildet ist.

Gemäß der in Figur 3 dargestellten Ausführungsform der Erfindung weist das Einlegeteil 80 an zwei gegenüberliegenden Rändern jeweils einen in den Elastomerabschnitt 18 hineinlaufenden Flügel 81 auf. Durch einen solchen Flügel 81 kann mittels einer gezielt ortsbezogenen Vergrößerung beziehungsweise Verlängerung des Einlegeteils 80 die Steifigkeit des Halteeelementes 14 verbessert werden. Die Verlängerung des Einlegeteils 80 durch solche Flügel 81 verbessert außerdem die Verankerung des Einlegeteils 80 im Elastomer, so dass keine großen Relativbewegungen mehr möglich sind und somit keine Risse im Elastomermaterial auftreten. Figur 3 zeigt eine Ausführungsform der Erfindung gemäß welcher die Flügel 81 annähernd mittig an den Rändern, insbesondere an den Längsseiten, des Einlegeteils 80 angeordnet sind, sodass die Flügel 81 möglichst zentral im Elastomermaterial eingebettet sind und sich bei Montagevorgängen gegebenenfalls noch etwas im Elastomer verformen können. Vorzugsweise wird hierbei das Einlegeteil 18 durch Vulkanisierung von den Elastomerabschnitt 18 bildenden Elastomermaterial umschlossen. Wie in Figur 3 zu erkennen ist, weist das Einlegeteil 80 an zwei Anschlussbolzen 82 auf, welche zur Herstellung entsprechenden Schraubverbindung mit einem Kraftfahrzeug vorgesehen sind. Auch der Elastomerabschnitt 18 des Halteelementes 14 gemäß Figur 3 weist zwei Aufnahmeabschnitte 70 auf, welche als sich im Wesentlichen in Axialrichtung 28 erstreckende schlitzförmige Aufnahmeöffnung ausgebildet sind. In diese Aufnahmeöffnungen 72 kann im montierten Zustand der entsprechende Kopplungsabschnitt 60 des Wärmeschutzschildes 40 eingeschoben werden.

## Patentansprüche

1. Haltevorrichtung (12) zur Befestigung eines Aggregats (10), insbesondere einer Pumpe, in einem Kraftfahrzeug, mit einem Halteelement (14),wobei das Halteelement (14) einen Befestigungsabschnitt (16) zum Anbringen des Halteelementes (14) im Kraftfahrzeug aufweist und wobei das Halteelement (14) zur Aufnahme des Aggregates (10) ausgebildet ist und wobei das Halteelement (14) zumindest einen Elastomerabschnitt (18) aufweist, wobei die Haltevorrichtung (12) einen am Elastomerabschnitt (18) befestigten Wärmeschutzschild (40) aufweist, welcher dazu ausgebildet ist, das Aggregat (10) gegenüber einer Wärmeeinwirkung durch Komponenten des Kraftfahrzeuges zumindest teilweise abzuschirmen, wobei der Wärmeschutzschild (40) einen Abschirmabschnitt (42) aufweist, welcher sich im Wesentlichen in Radialrichtung (29) erstreckt, wobei der Abschirmabschnitt (42) eingerichtet ist, eine Gehäuseseite des Aggregates (10) im Wesentlichen zumindest teilweise zu überdecken, wobei der Abschirmabschnitt (42) im Wesentlichen scheibenförmig ausgebildet ist, wobei der Abschirmabschnitt (42) eine bevorzugt zentrale Durchgangsöffnung (44) zur Aufnahme eines sich im Wesentlichen in Axialrichtung (28) erstreckenden Fluideinlasses (24) des Aggregates (10) aufweist.

2. Haltevorrichtung (12) nach Anspruch 1, **dadurch gekennzeichnet, dass** der Elastomerabschnitt (18) einen Innenbereich (30) zur Aufnahme des Aggregates (10) aufweist, wobei insbesondere der Elastomerabschnitt (18) mit seinem Innenbereich (30) am Aggregat (10) anliegt und wobei der Innenbereich (30) vorzugsweise im Wesentlichen zu einer Axialrichtung (28) rotationssymmetrisch ausgebildet ist und insbesondere der Elastomerabschnitt (18) im Wesentlichen ringförmig, insbesondere als ein das Halteelement (14) ausbildender Elastomerhalter ausgebildet ist.

3. Haltevorrichtung (12) nach einem der vorhergehenden Ansprüche, **dadurch gekennzeichnet, dass** am Abschirmabschnitt (42) zumindest ein, vorzugsweise zwei Kopplungsabschnitte (60) angeordnet sind, welche sich vorzugsweise im Wesentlichen in Axialrichtung (28) erstrecken und dazu vorgesehen sind, den Wärmeschutzschild (40) am Elastomerabschnitt (18) zu befestigen.

4. Haltevorrichtung (12) nach Anspruch 3, **dadurch gekennzeichnet, dass** der Elastomerabschnitt (18) einen zu dem wenigstens einen Kopplungsabschnitt (60) komplementären Aufnahmeabschnitt (70) aufweist.

5. Haltevorrichtung (12) nach Anspruch 4, **dadurch gekennzeichnet, dass** der Aufnahmeabschnitt (70) als eine sich im Wesentlichen in Axialrichtung (28) erstreckende, insbesondere schlitzförmige Aufnahmeöffnung (72) ausgebildet ist, in welchen der Kopplungsabschnitt (60) einschiebbar, insbesondere durchschiebar ist.

6. Haltevorrichtung (12) nach einem der Ansprüche 3-5, **dadurch gekennzeichnet, dass** der Abschirmabschnitt (42) mit dem zumindest einen Kopplungsabschnitt (60) einstückig ausgebildet ist, wobei das Wärmschutzschild (40) vorzugweise Metall und/oder einen Verbundwerkstoff aufweist.

7. Haltevorrichtung (12) nach einem der Ansprüche 3-6, **dadurch gekennzeichnet, dass** der Kopplungsabschnitt (60) und/oder der Aufnahmeabschnitt (70, 72) eine Rasteinrichtung (62) aufweist, wobei die Rasteinrichtung (62) insbesondere als zumindest ein, vorzugsweise zwei Rasthaken ausgebildet ist, wobei der Rasthaken bevorzugt derart ausgestaltet, dass der Rasthaken eine, zwei, drei oder vier Rastflächen aufweist, mittels welcher der Rasthaken am Aufnahmeabschnitt (70, 72) und/oder Kopplungsabschnitt (60) verrastend ansitzbar ist.

8. Haltevorrichtung (12) nach einem der Ansprüche 4-7, **dadurch gekennzeichnet, dass** der Kopplungsabschnitt (60) einen Axialanschlag (64) zur Begrenzung der Einschiebetiefe des Kopplungselementes (60) in den Aufnahmeabschnitt (70, 72) aufweist, wobei der Axialanschlag (64) insbesondere als zumindest ein, vorzugweise zwei Anschlagshaken ausgebildet ist, wobei insbesondere Anschlagshaken (64) und Rasthaken (62) formkongruent ausgebildet sind.

9. Haltevorrichtung (12) nach einem der vorhergehenden Ansprüche, **dadurch gekennzeichnet, dass** der Abschirmabschnitt (42) einen flächigen Fortsatz (50) aufweist, welcher zumindest teilweise einen sich im Wesentlichen in Radialebene erstreckenden Fluidauslass (26) des Aggregates (10) überdeckt, wobei der Fortsatz (50) vorzugsweise zumindest abschnittsweise schalenförmig, insbesondere halbrohrförmig ausgebildet ist.

10. Haltevorrichtung (12) nach einem der vorhergehenden Ansprüche, **dadurch gekennzeichnet, dass** der Abschirmabschnitt (42) einen umlaufenden Kragen (66) aufweist, welcher sich im Wesentlichen in Richtung des Aggregates (10) erstreckt, wobei der Abschirmabschnitt (42) vorzugsweise einstückig ausgebildet ist.

11. Haltevorrichtung (12) nach einem der vorhergehenden Ansprüche, **dadurch gekennzeichnet, dass** der Befestigungsabschnitt (16) als eine, vorzugsweise zwei Aufnahmebohrungen für eine Schraubverbindung ausgebildet ist.

12. Haltevorrichtung (12) nach einem der vorhergehenden Ansprüche, **dadurch gekennzeichnet, dass** der Befestigungsabschnitt als Einlegeteil (80) für den Elastomerabschnitt (18) ausgebildet ist, wobei das Einlegeteil (80) vorzugsweise einen oder mehrere Anschlussbolzen (82) zur Befestigung am Kraftfahrzeug aufweist.

13. Wärmeschutzschild (40) für eine Haltevorrichtung (12) nach einem der vorhergehenden Ansprüche, **dadurch gekennzeichnet, dass** der Wärmeschutzschild (40) dazu ausgebildet ist ein Aggregat (10) gegenüber einer Wärmeeinwirkung durch Komponenten des Kraftfahrzeuges zumindest teilweise abzuschirmen.

## Claims

1. Holding device (12) for fastening an apparatus (10), in particular a pump, to a motor vehicle, having a holding element (14), wherein the holding element (14) has a fastening portion (16) for attaching the holding element (14) in the motor vehicle, and wherein the holding element (14) is configured to receive the apparatus (10), and wherein the holding element (14) has at least one elastomer portion (18), wherein the holding device (12) has a heat shield (40) which is fastened to the elastomer portion (18) and which is configured to at least partially shield the apparatus (10) in relation to the effect of heat caused by components of the motor vehicle, wherein the heat shield (40) has a shielding portion (42) which extends substantially in the radial direction (29), wherein the shielding portion (42) is specified to substantially at least partially cover a housing side of the apparatus (10), wherein the shielding portion (42) is configured to be substantially disc-shaped, wherein the shielding portion (42) has a preferably central passage opening (44) for receiving a fluid inlet (24) of the apparatus (10) that extends substantially in the axial direction (28).

2. Holding device (12) according to Claim 1, **characterized in that** the elastomer portion (18) has an inner region (30) for receiving the apparatus (10), wherein in particular the elastomer portion (18) by way of its inner region (30) rests on the apparatus (10), and wherein the inner region (30) is preferably configured to be rotationally symmetrical substantially in terms of an axial direction (28), and in particular the elastomer portion (18) is configured to be substantially annular, in particular as an elastomer holder that forms the holding element (14).

3. Holding device (12) according to one of the preceding claims, **characterized in that** at least one, preferably two coupling portions (60), which preferably extend substantially in the axial direction (28) and are provided to fasten the heat shield (40) to the elastomer portion (18), are disposed on the shielding portion (42).

4. Holding device (12) according to Claim 3, **characterized in that** the elastomer portion (18) has a receptacle portion (70) which is complementary to the at least one coupling portion (60).

5. Holding device (12) according to Claim 4, **characterized in that** the receptacle portion (70) is configured as an in particular slot-shaped receptacle opening (72) which extends substantially in the axial direction (28) and in which the coupling portion (60) is able to be inserted, in particular able to be pushed through.

6. Holding device (12) according to one of Claims 3 to 5, **characterized in that** the shielding portion (42) is formed so as to be integral to the at least one coupling portion (60), wherein the heat shield (40) preferably comprises metal and/or a composite material.

7. Holding device (12) according to one of Claims 3 to 6, **characterized in that** the coupling portion (60) and/or the receptacle portion (70, 72) have/has a latching unit (62), wherein the latching unit (62) is in particular formed as at least one, preferably two latching hooks, wherein the latching hook is preferably configured in such a manner that the latching hook has one, two, three or four latching faces by means of which the latching hook is able to rest in a latching manner on the receptacle portion (70, 72) and/or coupling portion (60).

8. Holding device (12) according to one of Claims 4 to 7, **characterized in that** the coupling portion (60) has an axial stop (64) for delimiting the insertion depth of the coupling element (60) in the receptacle portion (70, 72), wherein the axial stop (64) is in particular formed as at least one, preferably two stop hooks, wherein in particular stop hooks (64) and latching hooks (62) are formed so as to be congruent in terms of shape.

9. Holding device (12) according to one of the preceding claims, **characterized in that** the shielding portion (42) has a planar appendage (50) which at least partially covers a fluid outlet (26) of the apparatus (10) that extends substantially in the radial plane, wherein the appendage (50) is preferably configured to be bowl-shaped, in particular semi-tubular, at least in portions.

10. Holding device (12) according to one of the preceding claims, **characterized in that** the shielding portion (42) has an encircling collar (66) which extends substantially in the direction of the apparatus (10), wherein the shielding portion (42) is preferably integrally formed.

11. Holding device (12) according to one of the preceding claims, **characterized in that** the fastening portion (16) is configured as one, preferably two receptacle bores for a screw connection.

12. Holding device (12) according to one of the preceding claims, **characterized in that** the fastening portion is configured as an insert part (80) of the elastomer portion (18), wherein the insert part (80) preferably has one or a plurality of connecting bolts (82) for fastening to the motor vehicle.

13. Heat shield (40) for a holding device (12) according to one of the preceding claims, **characterized in that** the heat shield (40) is configured to at least partially shield an apparatus (10) in relation to the effect of heat caused by components of the motor vehicle.

## Revendications

1. Dispositif de retenue (12) pour la fixation d'un groupe (10), notamment d'une pompe, dans un véhicule automobile, avec un élément de retenue (14), l'élément de retenue (14) présentant une section de fixation (16) pour le montage de l'élément de retenue (14) dans le véhicule automobile et l'élément de retenue (14) étant réalisé pour recevoir le groupe (10) et l'élément de retenue (14) présentant au moins une section en élastomère (18), le dispositif de retenue (12) présentant un bouclier de protection thermique (40) fixé sur la section en élastomère (18), lequel est réalisé pour protéger au moins partiellement le groupe (10) contre une action thermique par des composants du véhicule automobile, le bouclier de protection thermique (40) présentant une section de blindage (42) qui s'étend essentiellement dans la direction radiale (29), la section de blindage (42) étant adaptée pour recouvrir essentiellement au moins partiellement un côté boîtier du groupe (10), la section de blindage (42) étant réalisée essentiellement en forme de disque, la section de blindage (42) présentant une ouverture de passage (44) de préférence centrale pour recevoir une entrée de fluide (24) du groupe (10) s'étendant essentiellement dans la direction axiale (28).

2. Dispositif de retenue (12) selon la revendication 1, **caractérisé en ce que** la section en élastomère (18) présente une zone intérieure (30) pour recevoir le groupe (10), la section en élastomère (18) s'appliquant notamment par sa zone intérieure (30) contre le groupe (10) et la zone intérieure (30) étant réalisée de préférence essentiellement à symétrie de révolution par rapport à une direction axiale (28) et la section en élastomère (18) étant notamment réalisée essentiellement sous forme annulaire, notamment sous la forme d'un support en élastomère réalisant l'élément de retenue (14).

3. Dispositif de retenue (12) selon l'une quelconque des revendications précédentes, **caractérisé en ce qu'**au moins une, de préférence deux sections de couplage (60) sont agencées sur la section de blindage (42), lesquelles s'étendent de préférence essentiellement dans la direction axiale (28) et sont prévues pour fixer le bouclier de protection thermique (40) sur la section en élastomère (18).

4. Dispositif de retenue (12) selon la revendication 3, **caractérisé en ce que** la section en élastomère (18) présente une section de réception (70) complémentaire de l'au moins une section de couplage (60).

5. Dispositif de retenue (12) selon la revendication 4, **caractérisé en ce que** la section de réception (70) est réalisée sous la forme d'une ouverture de réception (72), notamment en forme de fente, s'étendant essentiellement dans la direction axiale (28), dans laquelle la section de couplage (60) peut être insérée, notamment coulissée.

6. Dispositif de retenue (12) selon l'une quelconque des revendications 3 à 5, **caractérisé en ce que** la section de blindage (42) est réalisée d'un seul tenant avec l'au moins une section de couplage (60), le bouclier de protection thermique (40) présentant de préférence du métal et/ou un matériau composite.

7. Dispositif de retenue (12) selon l'une quelconque des revendications 3 à 6, **caractérisé en ce que** la section de couplage (60) et/ou la section de réception (70, 72) présentent un appareil d'encliquetage (62), l'appareil d'encliquetage (62) étant réalisé notamment sous la forme d'au moins un, de préférence deux crochets d'encliquetage, le crochet d'encliquetage étant de préférence conçu de telle sorte que le crochet d'encliquetage présente une, deux, trois ou quatre surfaces d'encliquetage, au moyen desquelles le crochet d'encliquetage peut être ajusté par encliquetage sur la section de réception (70, 72) et/ou la section de couplage (60).

8. Dispositif de retenue (12) selon l'une quelconque des revendications 4 à 7, **caractérisé en ce que** la section de couplage (60) présente une butée axiale (64) pour limiter la profondeur d'insertion de l'élément de couplage (60) dans la section de réception (70, 72), la butée axiale (64) étant réalisée notamment sous la forme d'au moins un, de préférence deux crochets de butée, les crochets de butée (64) et les crochets d'encliquetage (62) étant notamment réalisés avec une congruence de forme.

9. Dispositif de retenue (12) selon l'une quelconque des revendications précédentes, **caractérisé en ce que** la section de blindage (42) présente un prolongement plat (50) qui recouvre au moins partiellement une sortie de fluide (26) du groupe (10) s'étendant essentiellement dans un plan radial, le prolongement (50) étant de préférence réalisé au moins par sections en forme de coque, notamment en forme de demi-tube.

10. Dispositif de retenue (12) selon l'une quelconque des revendications précédentes, **caractérisé en ce que** la section de blindage (42) présente une collerette périphérique (66) qui s'étend essentiellement en direction du groupe (10), la section de blindage (42) étant de préférence réalisée d'un seul tenant.

11. Dispositif de retenue (12) selon l'une quelconque des revendications précédentes, **caractérisé en ce que** la section de fixation (16) est réalisée sous la forme d'un, de préférence deux, alésages de réception pour une liaison par vis.

12. Dispositif de retenue (12) selon l'une quelconque des revendications précédentes, **caractérisé en ce que** la section de fixation est réalisée sous forme de pièce d'insertion (80) pour la section en élastomère (18), la pièce d'insertion (80) présentant de préférence un ou plusieurs boulons de raccordement (82) pour la fixation au véhicule automobile.

13. Bouclier de protection thermique (40) pour un dispositif de retenue (12) selon l'une quelconque des revendications précédentes, **caractérisé en ce que** le bouclier de protection thermique (40) est réalisé pour protéger au moins partiellement un groupe (10) contre une action de chaleur par des composants du véhicule automobile.
